(19) Europäisches Patentamt
European Patent Office
Office européen des brevets

(11) **EP 3 258 583 B1**

(12) **EUROPEAN PATENT SPECIFICATION**

(45) Date of publication and mention
of the grant of the patent:
**21.10.2020 Bulletin 2020/43**

(51) Int Cl.:
***H02M 3/155*** *(2006.01)*   ***F25B 1/00*** *(2006.01)*
***H02M 1/32*** *(2007.01)*   ***H02M 1/36*** *(2007.01)*
***H02M 3/158*** *(2006.01)*

(21) Application number: **15883902.7**

(22) Date of filing: **02.03.2015**

(86) International application number:
**PCT/JP2015/056120**

(87) International publication number:
**WO 2016/139734 (09.09.2016 Gazette 2016/36)**

(54) **POWER CONVERSION DEVICE AND REFRIGERATION CYCLE DEVICE**

LEISTUNGSUMWANDLUNGSVORRICHTUNG UND KÜHLZYKLUSVORRICHTUNG

DISPOSITIF DE CONVERSION D'ÉNERGIE ET DISPOSITIF À CYCLE FRIGORIFIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2017 Bulletin 2017/51**

(73) Proprietor: **Mitsubishi Electric Corporation
Chiyoda-ku
Tokyo 100-8310 (JP)**

(72) Inventors:
• **YUASA, Kenta**
  **Tokyo 100-8310 (JP)**
• **KUSUBE, Shinsaku**
  **Tokyo 100-8310 (JP)**

• **IWATA, Akihiko**
  **Tokyo 100-8310 (JP)**
• **TSUMURA, Akihiro**
  **Tokyo 100-8310 (JP)**

(74) Representative: **Pfenning, Meinig & Partner mbB
Patent- und Rechtsanwälte
Joachimsthaler Straße 10-12
10719 Berlin (DE)**

(56) References cited:
**WO-A1-2015/011879    JP-A- S6 192 162
JP-A- 2007 068 338     JP-A- 2013 183 571
JP-B2- 5 528 622       JP-B2- 5 528 622**

## Description

Technical Field

The present invention relates to a power conversion device configured to convert electric power and a refrigeration cycle apparatus including the power conversion device.

Background Art

Examples of a refrigeration cycle apparatus including a power conversion device include a refrigerating and air-conditioning apparatus. The refrigerating and air-conditioning apparatus includes a compressor and a fan, for example. A large-capacity power conversion device, which is configured to drive motors included in the compressor, the fan, and other components, adopts a method in which a DC bus voltage for driving an inverter is generated by a three-phase full-wave rectifier circuit, for example. A smoothing capacitor is connected in a previous stage of the inverter to stabilize a voltage output to the inverter. Then, an AC voltage supplied from a commercial power supply is converted into a DC voltage by a rectifier, smoothed by the smoothing capacitor, and then converted into an AC voltage having a predetermined voltage value and frequency by the inverter. Then, the voltage is output to a motor and other loads.

Indices for measuring a capacity of the refrigerating and air-conditioning apparatus include energy efficiency ratios (COP) in a rated cooling operation and a rated heating operation, and an annual performance factor (APF) throughout a year. In recent years, in the refrigerating and air-conditioning apparatus, in order to increase the energy efficiency ratios and the annual performance factor, the motor for the compressor tends to be designed so that an induced voltage (counter-electromotive force) is at the same level as a power supply voltage near a rotation speed used in a rated operation of the refrigerating and air-conditioning apparatus. In this case, when operated in a high-speed rotation range exceeding the rotation speed, for example, during an overload operation, the power conversion device cannot output a voltage that is equal to or higher than the power supply voltage, and hence an electric current in the compressor is increased due to output voltage saturation.

As a result, due to a reduction in motor efficiency and an increase in loss of the power conversion device, efficiency of the power conversion device is reduced. Moreover, due to constraints of demagnetization resistance of a magnet used in the motor of the compressor, and of an allowable current and an allowable temperature of a semiconductor used in the power conversion device, there is a fear that an operating range of the motor may be reduced. Moreover, the smoothing capacitor is charged when a power supply is turned on. When a large-capacity smoothing capacitor is charged, there is a fear in that an inrush current that is several times a current in a normal operation may flow through the smoothing capacitor from an AC power supply.

In Patent Literature 1, in order to drive the motor with high efficiency and increase the operating range, there is disclosed a power conversion device including a booster circuit, which is configured to increase a range of output voltages of the power conversion device. In Patent Literature 1, magnetic energy of a reactor and electrostatic energy of a charge and discharge capacitor, which is provided separately from a smoothing capacitor, are used in combination to perform a boost operation. This charge and discharge capacitor is charged using an initial charging circuit, which is formed of a diode and a Zener diode. The initial charging circuit has a function of preventing an inrush current, and also has a function of protecting switching devices, which are provided to charge the charge and discharge capacitor.

Patent Literature 2 discloses a power supply system including two power supplies which are electrically connected to smoothing capacitors via respective relays. A current limiting circuit is connected in parallel to one of the relays, and first and second smoothing capacitors are precharged via the current limiting circuit. After completion of precharge, a third capacitor is charged being connected in parallel to the power supply by way of reactors and switches.

Citation List

Patent Literature

Patent Literature 1: Japanese Patent No. 5528622
Patent Literature 2: WO 2015/011879 A1

Summary of Invention

Technical Problem

However, the power conversion device disclosed in Patent Literature 1 includes the initial charging circuit, and hence has a problem of a complicated circuit configuration.

The present invention has been made in view of the above-mentioned problem, and therefore provides a power conversion device having a simplified circuit configuration, and a refrigeration cycle apparatus including the power conversion device.

Solution to Problem

The present invention is defined by the features of independent claim 1. According to one embodiment of the present invention, there is provided a power conversion device, including: a resistance value changing circuit, which is configured to receive input of a DC voltage, which includes a resistor and a relay connected in parallel to the resistor, and which has a resistance value changed by an operation of the relay; a booster circuit, which is configured to boost the DC voltage output from the resistance value changing circuit; a smoothing capacitor, which is configured to smooth the DC voltage output from the booster circuit, the booster circuit including: a reactor, which is connected in series to the resistance value changing circuit; a first backflow prevention device and a second backflow prevention device, which connect the reactor and one end of the smoothing capacitor to allow an electric current to flow from the reactor side to the smoothing capacitor side, and which are connected in series to each other; a first switching device and a second switching device, which connect the reactor and another end of the smoothing capacitor, and which are connected in series to each other; and an intermediate capacitor, which connects a point between the first backflow prevention device and the second backflow prevention device and a point between the first switching device and the second switching device; and a drive circuit, which is configured to generate a control power source to drive the first switching device and the second switching device with the control power source.

Advantageous Effects of Invention

According to the embodiment of the present invention, the resistance value converting circuit is included. Therefore, the circuit configuration of the power conversion circuit can be simplified while the inrush current is prevented and the first switching device and the second switching device are protected.

Brief Description of Drawings

[Fig. 1] Fig. 1 is a circuit diagram for illustrating a power conversion device 1 according to Embodiment 1 of the present invention.
[Fig. 2A] Fig. 2A is a circuit diagram for illustrating a path of an electric current in the power conversion device 1 according to Embodiment 1 of the present invention.
[Fig. 2B] Fig. 2B is a circuit diagram for illustrating a path of an electric current in the power conversion device 1 according to Embodiment 1 of the present invention.
[Fig. 2C] Fig. 2C is a circuit diagram for illustrating a path of an electric current in the power conversion device 1 according to Embodiment 1 of the present invention.
[Fig. 2D] Fig. 2D is a circuit diagram for illustrating a path of an electric current in the power conversion device 1 according to Embodiment 1 of the present invention.
[Fig. 3] Fig. 3 is a timing chart for illustrating an operation of the power conversion device 1 according to Embodiment 1 of the present invention.
[Fig. 4] Fig. 4 is a flow chart for illustrating an operation of a controller 20 according to Embodiment 1 of the present invention.
[Fig. 5] Fig. 5 is a circuit diagram for illustrating a power conversion device 1 according to a modification example of Embodiment 1 of the present invention.
[Fig. 6] Fig. 6 is a circuit diagram for illustrating a refrigeration cycle apparatus 40 according to Embodiment 2 of the present invention.

Description of Embodiments

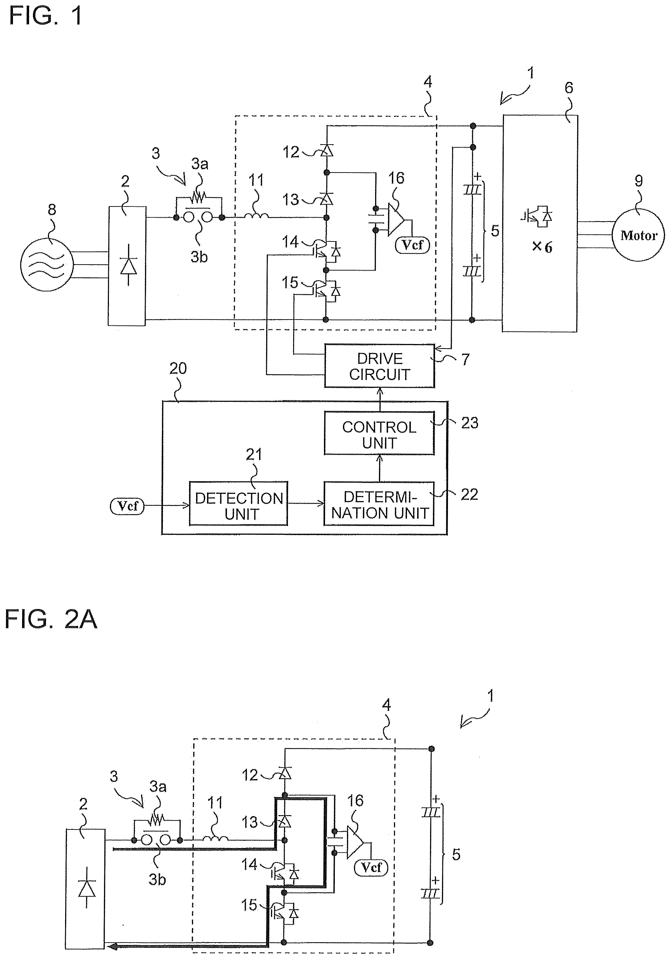

Now, a power conversion device and a refrigeration cycle apparatus according to embodiments of the present invention are described with reference to the drawings. Note that, the present invention is not limited to the embodiments described below. Moreover, in the drawings referred to below including Fig. 1, the size relationship between components may be different from the reality in some cases.

Embodiment 1

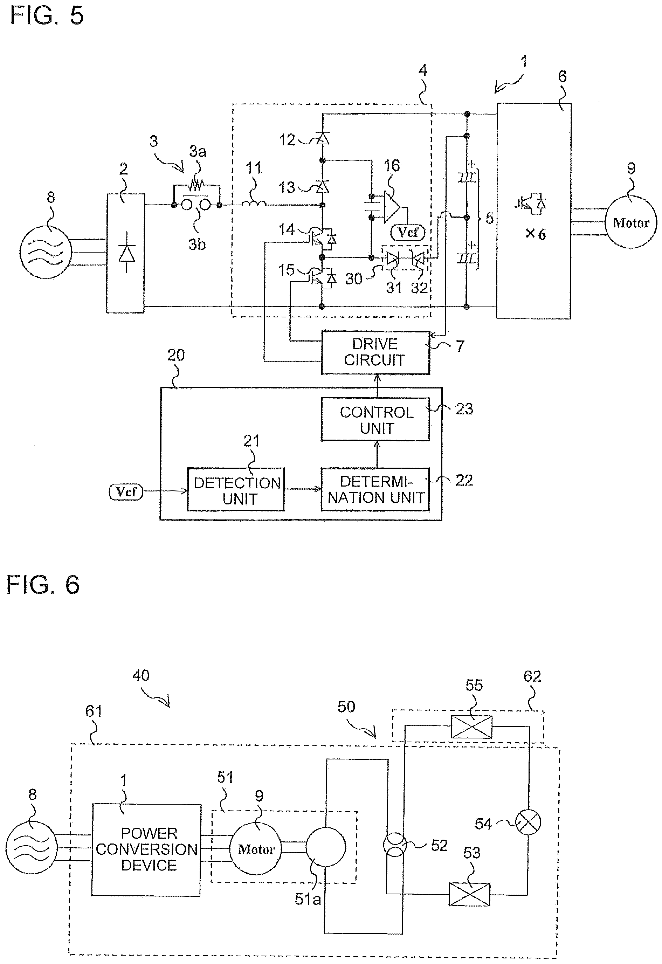

Fig. 1 is a circuit diagram for illustrating a power conversion device 1 according to Embodiment 1 of the present invention. The power conversion device 1 is described with reference to Fig. 1. As illustrated in Fig. 1, the power conversion device 1 includes an inrush prevention circuit 3, a booster circuit 4, a smoothing capacitor 5, and a drive circuit 7. The power conversion device 1 further includes a rectifier 2, an inverter 6, and a controller 20, for example. The power conversion device 1 is configured to convert an AC voltage supplied from a three-phase commercial power supply 8 into an AC voltage having a predetermined voltage value and a predetermined frequency to be supplied to a motor 9 of a compressor 51 (see Fig. 6), for example. The power conversion device 1 may convert an AC voltage supplied from a single-phase commercial power supply 8, or convert a DC voltage supplied from a DC power supply.
The rectifier 2 is configured to convert the AC voltage into a DC voltage to output the DC voltage to the inrush prevention circuit 3. The rectifier 2 is configured to convert a 200-V or 400-V AC voltage from the commercial power supply 8 into the DC voltage, for example, and is a three-phase full-wave rectifier circuit formed by bridge-connecting six diodes 31, for example.
The inrush prevention circuit 3 is configured to receive input of the DC voltage, includes an inrush preventing resistor 3a and a relay 3b connected in parallel to the inrush preventing resistor 3a, and has a resistance value changed by an operation of the relay 3b. The inrush prevention circuit 3 corresponds to a resistance value changing circuit in the present invention. In this manner, the inrush prevention circuit 3 prevents an inrush current that flows when the power supply is turned on. The inrush preventing resistor 3a corresponds to a resistor in the present invention. Moreover, the relay 3b is connected in parallel to the inrush preventing resistor 3a. When the relay 3b is off, an electric current output from the rectifier 2 passes through the inrush preventing resistor 3a. In contrast, when the relay 3b is on, the electric current output from the rectifier 2 does not pass through the inrush preventing resistor 3a, but passes through a side on which the relay 3b is provided. When the power supply is turned on, the relay 3b is turned off so that the electric current is reduced in current value by the inrush preventing resistor 3a. As a result, the inrush current is prevented.

The booster circuit 4 is configured to boost the DC voltage output from the inrush prevention circuit 3. The booster circuit 4 includes a reactor 11, a first backflow prevention device 12, a second backflow prevention device 13, a first switching device 14, a second switching device 15, and an intermediate capacitor 16.

The reactor 11 is connected in series to the inrush prevention circuit 3 to boost the DC voltage output from the inrush prevention circuit 3.

The first backflow prevention device 12 and the second backflow prevention device 13 are connected in series to each other, and connect the reactor 11 and one end of the smoothing capacitor 5 to allow an electric current to flow from the reactor 11 side to the smoothing capacitor 5 side. In Fig. 1, the first backflow prevention device 12 is arranged on the smoothing capacitor 5 side, and the second backflow prevention device 13 is arranged on the reactor 11 side. Each of the first backflow prevention device 12 and the second backflow prevention device 13 is a diode 31, for example, and may be formed of a wide-bandgap semiconductor, for example, silicon carbide (SiC), gallium nitride (GaN), or diamond, which has a wide bandgap as compared to silicon (Si). Alternatively, each of the first backflow prevention device 12 and the second backflow prevention device 13 may be a fast recovery diode.

The first switching device 14 and the second switching device 15 are connected in series to each other, and connect the reactor 11 and an other end of the smoothing capacitor 5. In Fig. 1, the first switching device 14 is arranged on the reactor 11 side, and the second switching device 15 is arranged on the smoothing capacitor 5 side. In other words, in the booster circuit 4, the reactor 11, the second backflow prevention device 13, and the first switching device 14 are connected to one another. Each of the first switching device 14 and the second switching device 15 is a diode, for example, and may be formed of a wide-bandgap semiconductor, for example, silicon carbide (SiC), gallium nitride (GaN), or diamond, which has a wide bandgap as compared to silicon (Si).

The intermediate capacitor 16 connects a point between the first backflow prevention device 12 and the second backflow prevention device 13 and a point between the first switching device 14 and the second switching device 15 to boost, together with the reactor 11, the DC voltage output from the inrush prevention circuit 3. In this manner, boosting in the booster circuit 4 is performed using not only the reactor 11 but also electrostatic energy of the intermediate capacitor 16, and hence the power conversion device 1 may increase a boosted amount.

The smoothing capacitor 5 is configured to smooth the DC voltage output from the booster circuit 4. The smoothing capacitor 5 is charged with the DC voltage output from the booster circuit 4, and the resistance value of the inrush prevention circuit 3 is changed to change charging time of the smoothing capacitor 5. A plurality of the smoothing capacitors 5 are provided, for example, and in Fig. 1, two smoothing capacitors 5 are exemplified.

The inverter 6 is connected in parallel to the smoothing capacitors 5 to convert the DC voltage into an AC voltage. A modulation method is PWM, for example. The inverter 6 is formed of a plurality of switching devices, for example, IGBTs. Each of semiconductor devices, such as the switching devices, used in the inverter 6 may be formed of a wide-bandgap semiconductor, for example, silicon carbide (SIC).

The drive circuit 7 is configured to generate, based on the voltage supplied from the smoothing capacitors 5, a control power source for controlling the first switching device 14 and the second switching device 15 to drive the first switching device 14 and the second switching device 15 with the control power source. The drive circuit 7 may generate the control power source based on a voltage supplied from the commercial power supply 8.

The controller 20 is configured to control an operation of the booster circuit 4, and includes a detection unit 21, a determination unit 22, and a control unit 23.

The detection unit 21 is configured to detect a capacitor voltage charged in the intermediate capacitor 16.

The determination unit 22 is configured to determine whether or not the capacitor voltage, which is detected by the detection unit 21, falls within a threshold voltage range.

The control unit 23 is configured to cause, when the determination unit 22 determines that the capacitor voltage is outside the threshold voltage range, the drive circuit 7 to drive the first switching device 14 and the second switching device 15 so that the capacitor voltage falls within the threshold voltage range.

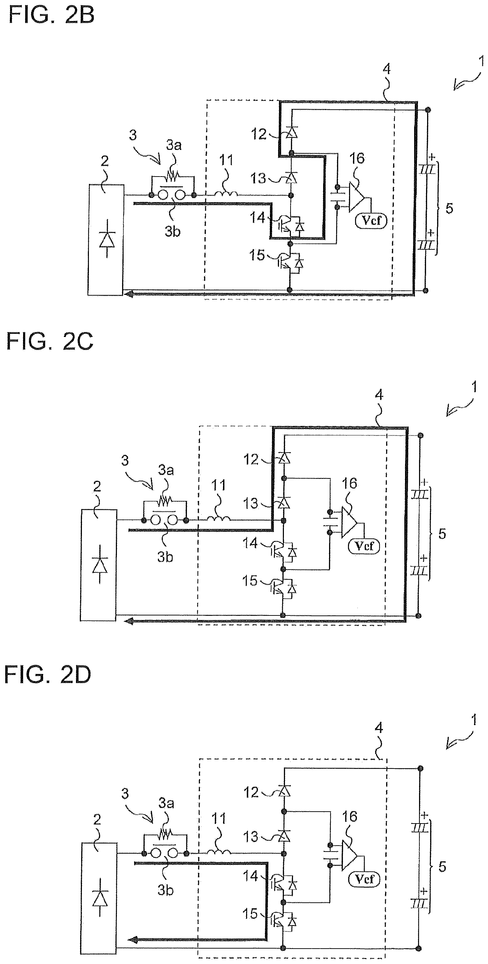

Fig. 2A, Fig. 2B, Fig. 2C, and Fig. 2D are each a circuit diagram for illustrating a path of an electric current in the power conversion device 1 according to Embodiment 1 of the present invention. Next, the path of the electric current in the power conversion device 1 is described. As illustrated in Fig. 2A, when the first switching device 14 is turned off, and when the second switching device 15 is turned on, the electric current is allowed to flow through the rectifier 2, the reactor 11, the second backflow prevention device 13, the intermediate capacitor 16, the second switching device 15, and the rectifier 2 in the stated order. In this manner, energy of the DC voltage rectified in the rectifier 2 is transferred to the intermediate capacitor 16 to charge the intermediate capacitor 16.

When a voltage charged in the smoothing capacitors 5 is represented by Vdc, a capacitor voltage charged in the intermediate capacitor 16 is Vdc/2, for example. When the voltage charged in the intermediate capacitor 16 is 0, the voltage of the smoothing capacitors 5 is applied only to the second switching device 15, and there is a fear of exceeding a withstand voltage of the second switching device 15. In Embodiment 1, the capacitor voltage charged in the intermediate capacitor 16 is set to Vdc/2 so that Vdc/2 is applied to both of the first switching device 14 and the second switching device 15. In this manner, in Embodiment 1, the voltage is uniformly applied to the first switching device 14 and the second switching device 15.

As illustrated in Fig. 2B, when the first switching device 14 is turned on, and when the second switching device 15 is turned off, the electric current is allowed to flow through the rectifier 2, the reactor 11, the first switching device 14, the intermediate capacitor 16, the first backflow prevention device 12, the smoothing capacitors 5, and the rectifier 2 in the stated order. In this manner, the voltage charged in the intermediate capacitor 16 is discharged.

As illustrated in Fig. 2C, when the first switching device 14 is turned off, and when the second switching device 15 is turned off, the electric current is allowed to flow through the rectifier 2, the reactor 11, the second backflow prevention device 13, the first backflow prevention device 12, the smoothing capacitors 5, and the rectifier 2 in the stated order. In this manner, the energy of the DC voltage rectified in the rectifier 2 is transferred to the smoothing capacitors 5 to charge the smoothing capacitors 5.

As illustrated in Fig. 2D, when the first switching device 14 is turned on, and when the second switching device 15 is turned on, the electric current is allowed to flow through the rectifier 2, the reactor 11, the first switching device 14, the second switching device 15, and the rectifier 2 in the stated order. In this manner, the energy of the DC voltage rectified in the rectifier 2 is transferred to the reactor 11 to charge the reactor 11.

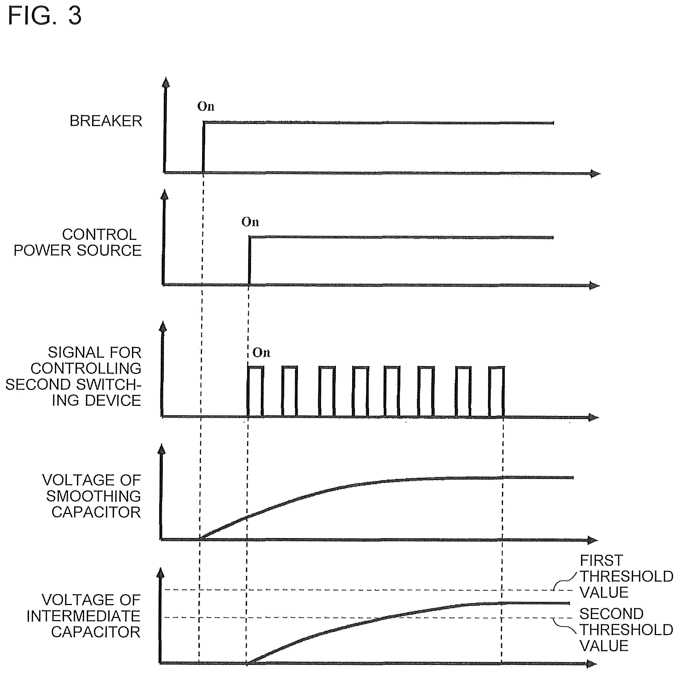

Fig. 3 is a timing chart for illustrating an operation of the power conversion device 1 according to Embodiment 1 of the present invention. Next, the operation of the power conversion device 1 is described. As illustrated in Fig. 3, when a breaker is turned on, the AC voltage is supplied from the commercial power supply 8 to the power conversion device 1. When the power supply is turned on, the electric current is allowed to flow along the path illustrated in Fig. 2C so that the smoothing capacitors 5 start being charged first. At this time, the first switching device 14 and the second switching device 15 do not operate because the control power source is not generated.

When the voltage charged in the smoothing capacitors 5 exceeds a predetermined voltage, the drive circuit 7 generates the control power source for controlling the first switching device 14 and the second switching device 15. Then, the drive circuit 7 turns on the second switching device 15 with the control power source. In other words, a transition is made from the path illustrated in Fig. 2C to the path illustrated in Fig. 2A. As a result, the intermediate capacitor 16 starts being charged. In this manner, the power conversion device 1 is configured so that when the power supply is turned on, the capacitor voltage charged in the intermediate capacitor 16 becomes lower than the voltage charged in the smoothing capacitors 5.

Here, when the voltage of the smoothing capacitors 5 is represented by Vdc, a voltage rectified by the rectifier 2 is represented by Vd, a capacity of the smoothing capacitors 5 is represented by C, a resistance value of the inrush preventing resistor 3a is represented by R, and charging time is represented by t, a speed Vdc at which the smoothing capacitors 5 are charged is calculated based on the following expression (1).

$$Vdc = Vd \times (1 - \exp(-t/CR)) \cdots (1)$$

In other words, regarding the smoothing capacitors 5, the resistance value R of the inrush preventing resistor 3a is changed to change the charging time of the smoothing capacitors 5. The resistance value R is set to a desired value to obtain the charging time of the smoothing capacitors 5 illustrated in Fig. 3. When the charging speed of the smoothing capacitors 5 is high, the second switching device 15 is turned on with the generated control power source, and the charging of the smoothing capacitors 5 is completed before charging of the intermediate capacitor 16 is started. In this case, there is a fear of exceeding the withstand voltage of the second switching device 15.

In Embodiment 1, the charging time of the smoothing capacitors 5 is delayed when the power supply is turned on, with the result that the charging of the intermediate capacitor 16 is started before the charging of the smoothing capacitors 5 is completed. In this manner, the exceeding of the withstand voltage of the second switching device 15 is suppressed.

The completion of the charging of the smoothing capacitors 5 encompasses not only a case where the smoothing capacitors 5 are fully charged, but also a case where a voltage that is 90% or more of a full charge voltage of the smoothing capacitors 5 is charged, for example.

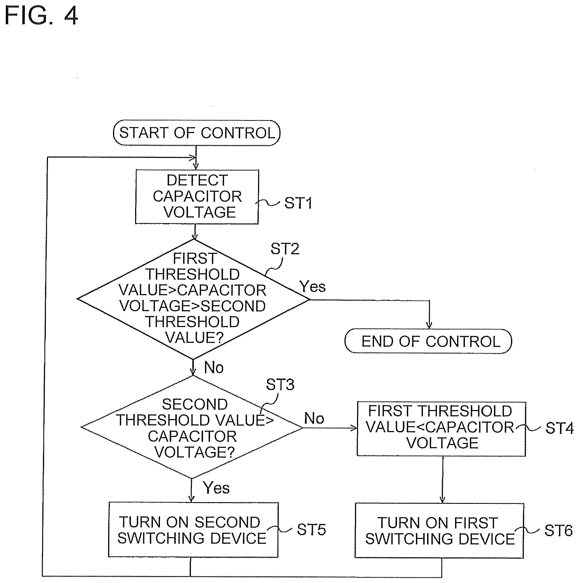

Fig. 4 is a flow chart for illustrating an operation of the controller 20 according to Embodiment 1 of the present invention. Next, the operation of the controller 20 in the power conversion device 1 is described. As illustrated in Fig. 4, first, the capacitor voltage of the intermediate capacitor 16 is detected by the detection unit 21 (Step ST1). Next, the determination unit 22 determines whether or not the capacitor voltage detected by the detection unit 21 falls within the threshold voltage range (Step ST2). Specifically, it is determined whether or not the capacitor voltage is smaller than a first threshold value and is larger than a second threshold value. When it is determined that the capacitor voltage falls within the threshold voltage range (Yes in Step ST2), the control is ended.

In contrast, when it is determined that the capacitor voltage is outside the threshold voltage range (No in Step ST2), it is determined whether or not the capacitor voltage is smaller than the second threshold value (Step ST3). When it is determined that the capacitor voltage is smaller than the second threshold value (Yes in Step ST3), the control unit 23 instructs the drive circuit 7 to turn on the second switching device 15 (Step ST5). When it is determined that the capacitor voltage is smaller than the second threshold value, the second switching device 15 is turned on to charge the capacitor voltage (Fig. 2A). As a result, the capacitor voltage is increased.

In contrast, when it is determined that the capacitor voltage is larger than the second threshold value in Step ST3 (No in Step ST3), the capacitor voltage is determined to be larger than the first threshold value (Step ST4). Then, the control unit 23 instructs the drive circuit 7 to turn on the first switching device 14 (Step ST6). When it is determined that the capacitor voltage is larger than the first threshold value, the first switching device 14 is turned on to discharge the capacitor voltage (Fig. 2B). As a result, the capacitor voltage is decreased.

Then, when Step ST5 and Step ST6 are completed, the control returns to Step ST1. The control is repeated in this manner, with the result that the capacitor voltage of the intermediate capacitor 16 falls within the threshold voltage range.

Here, there is exemplified a case where a target value of the capacitor voltage of the intermediate capacitor 16 is 1/2 the full charge voltage Vdc of the smoothing capacitors 5. The capacitor voltage charged in the intermediate capacitor 16 is set to Vdc/2 so that Vdc/2 is applied to both of the first switching device 14 and the second switching device 15. In this manner, in Embodiment 1, the voltage is uniformly applied to the first switching device 14 and the second switching device 15.

Further, the first threshold value is set to Vdc/2+$\alpha$, and the second threshold value is set to Vdc/2-$\alpha$, for example. Here, $\alpha$ is a parameter indicating how closely the voltage approximates to the target value Vdc/2 of the capacitor voltage. In other words, $\alpha$ is a parameter indicating to what extent the voltages applied to the first switching device 14 and the second switching device 15 become out of balance. Therefore, when the withstand voltage of each of the first switching device 14 and the second switching device 15 is low, $\alpha$ is set small, and when the withstand voltage of each of the first switching device 14 and the second switching device 15 is high, $\alpha$ is set large. In the above description, the capacitor voltage is set to Vdc/2, and the parameter is set to $\alpha$. However, the present invention is not limited thereto, and the capacitor voltage and the parameter may be changed as appropriate depending on the use.

Next, an action of the power conversion device 1 according to Embodiment 1 is described. The drive circuit 7 is configured to drive the first switching device 14 and the second switching device 15 with the voltage supplied from the smoothing capacitors 5. As a result, when the power supply is turned on or in the normal operation after the smoothing capacitors 5 are charged, the intermediate capacitor 16 can be charged with operations of the first switching device 14 and the second switching device 15. Moreover, the power conversion device 1 includes the inrush prevention circuit 3, and hence can prevent the inrush current, which flows when the power supply is turned on.

In the related art, when not only the smoothing capacitors 5 but also the intermediate capacitor 16 is provided, for the purpose of preventing the inrush current and suppressing the exceeding of the withstand voltage of each of the first switching device 14 and the second switching device 15, an initial charging circuit is provided. The initial charging circuit includes a diode and a Zener diode. The diode connects a point between the first switching device and the second switching device and a point between the smoothing capacitors to allow an electric current to flow from a side of the point between the first switching device and the second switching device to a side of the point between the smoothing capacitors. Moreover, the Zener diode prevents the electric current from flowing from the side of the point between the first switching device and the second switching device to the side of the point between the smoothing capacitors until a Zener voltage is reached.

The initial charging circuit is configured to charge the intermediate capacitor when the power supply is turned on. In this manner, the initial charging circuit not only prevents the inrush current, but also suppresses the exceeding of the withstand voltage of each of the first switching device and the second switching device.

In contrast, in Embodiment 1, also when the power supply is turned on, the intermediate capacitor 16 is charged with the operations of the first switching device 14 and the second switching device 15. Therefore, the necessity for an initial charging circuit 30 is eliminated. Therefore, the circuit configuration of the power conversion device 1 can be simplified. In this manner, in Embodiment 1, the circuit configuration can be simplified while the inrush current is prevented and the first switching device 14 and the second switching device 15 are protected. Moreover, as a result, a cost and a footprint can be reduced. Further, without the initial charging circuit 30, the necessity for a unit configured to suppress the flow of the electric current at times other than the initial charging is also eliminated, and design is made easy.

Moreover, the controller 20 performs control so that the capacitor voltage of the intermediate capacitor 16 falls within the threshold voltage range, and hence the exceeding of the withstand voltage of each of the first switching device 14 and the second switching device 15 is further suppressed. Therefore, as each of the first switching device 14 and the second switching device 15, an inexpensive device having a low withstand voltage can be used. As a result, each of the first switching device 14 and the second switching device 15 may be configured to have a withstand voltage that is lower than a withstand voltage of at least one of a semiconductor device used in the rectifier 2 or the semiconductor device used in the inverter 6.

Moreover, in the power conversion device 1, charging of the intermediate capacitor 16 is started before charging of the smoothing capacitors 5 is completed. In addition, the controller 20 performs control so that the capacitor voltage of the intermediate capacitor 16 falls within the threshold voltage range. Therefore, starting performance until the booster circuit 4 is fully started can be improved.

In Embodiment 1, the operation at the time when the power supply is turned on has been described, but the present invention is not limited thereto. For example, when the inverter 6 is stopped, and when the determination unit 22 determines that the capacitor voltage is outside the threshold voltage range, the control unit 23 may cause the drive circuit 7 to drive the first switching device 14 and the second switching device 15 so that the capacitor voltage falls within the threshold voltage range. Moreover, when the inverter 6 is in operation, and when the determination unit 22 determines that the capacitor voltage is outside the threshold voltage range, the control unit 23 may cause the drive circuit 7 to drive the first switching device 14 and the second switching device 15 so that the capacitor voltage falls within the threshold voltage range.

(Modification Example)

Fig. 5 is a circuit diagram for illustrating a power conversion device 1 according to a modification example of Embodiment 1 of the present invention. Next, the power conversion device 1 according to the modification example of Embodiment 1 is described. The modification example is different from Embodiment 1 in that the initial charging circuit 30 is included. As illustrated in Fig. 5, the initial charging circuit 30 includes a diode 31, which connects a point between the first switching device 14 and the second switching device 15 and a point between the smoothing capacitors 5 to allow an electric current to flow from a side of the point between the first switching device 14 and the second switching device 15 to a side of the point between the smoothing capacitors 5, and a Zener diode 32, which prevents the electric current from flowing from the side of the point between the first switching device 14 and the second switching device 15 to the side of the point between the smoothing capacitors 5 until a Zener voltage is reached.

In the modification example, the intermediate capacitor 16 is charged not only with the operation of the first switching device 14 and the second switching device 15, but also using the initial charging circuit 30. As a result, the intermediate capacitor 16 can be charged even when one of the components malfunctions. Therefore, the risk of a failure of the first switching device 14 and the second switching device 15 due to the exceeding of the withstand voltage can be reduced. As a result, reliability is improved.

Embodiment 2

Next, a refrigeration cycle apparatus 40 according to Embodiment 2 of the present invention is described. Fig. 6 is a circuit diagram for illustrating the refrigeration cycle apparatus 40 according to Embodiment 2 of the present invention. The refrigeration cycle apparatus 40 according to Embodiment 2 includes the power conversion device 1 according to Embodiment 1. In Embodiment 2, parts common to Embodiment 1 are denoted by the same reference symbols so that a description thereof is omitted, and differences from Embodiment 1 are mainly described.

As illustrated in Fig. 6, the refrigeration cycle apparatus 40 is an air-conditioning apparatus, for example, and includes the power conversion device 1 and a refrigerant circuit 50. The refrigerant circuit 50 is formed by annularly connecting the compressor 51, to which electric power is to be supplied from the power conversion device 1, a four-way valve 52, a first heat exchanger 53, an expansion device 54, and a second heat exchanger 55 with a refrigerant pipe, and refrigerant circulates therethrough. Of those components, the power conversion device 1, the compressor 51, the four-way valve 52, the first heat exchanger 53, and the expansion device 54 are mounted inside an outdoor unit 61. Moreover, the second heat exchanger 55 is mounted inside an indoor unit 62.

The compressor 51 includes a compression device 51a, which is configured to compress the refrigerant, and the motor 9, which is configured to operate the compression device 51a. The motor 9 is connected to the power conversion device 1, and is driven by being supplied with the AC voltage, which is obtained by the conversion in the power conversion device 1. The four-way valve 52 is configured to change the circulation direction of refrigerant in the refrigerant circuit 50, and allows the refrigeration cycle apparatus 40 to perform both of a cooling operation and a heating operation. The first heat exchanger 53 is configured to exchange heat between, for example, outdoor air and the refrigerant. The expansion device 54 is configured to expand and decompress the refrigerant. The second heat exchanger 55 is configured to exchange heat between, for example, indoor air and the refrigerant.

Next, an operation of the refrigeration cycle apparatus 40 is described. First, the cooling operation is described. The compressor 51 sucks the refrigerant and compresses the refrigerant to discharge the refrigerant in a high-temperature and high-pressure gas state. The discharged refrigerant flows into the first heat exchanger 53 through the four-way valve 52, and the first heat exchanger 53 condenses the refrigerant by exchanging heat with outdoor air. The condensed refrigerant flows into the expansion device 54, and the expansion device 54 expands and decompresses the condensed refrigerant. Then, the refrigerant that has been decompressed to be two-phase gas-liquid refrigerant flows into the second heat exchanger 55, and the second heat exchanger 55 evaporates the refrigerant by exchanging heat with indoor air. The indoor air is cooled at this time, and the indoor space is cooled as a result. Then, the refrigerant that has been evaporated to enter a low-temperature and low-pressure gas state passes through the four-way valve 52 to be sucked by the compressor 51.

Next, the heating operation is described. The compressor 51 sucks the refrigerant and compresses the refrigerant to discharge the refrigerant in a high-temperature and high-pressure gas state. The discharged refrigerant flows into the second heat exchanger 55 through the four-way valve 52, and the second heat exchanger 55 condenses the refrigerant by exchanging heat with indoor air. The indoor air is heated at this time, and the indoor space is heated as a result. The condensed refrigerant flows into the expansion device 54, and the expansion device 54 expands and decompresses the condensed refrigerant. Then, the refrigerant that has been decompressed to be two-phase gas-liquid refrigerant flows into the first heat exchanger 53, and the first heat exchanger 53 evaporates the refrigerant by exchanging heat with outdoor air. Then, the refrigerant that has been evaporated to enter a low-temperature and low-pressure gas state passes through the four-way valve 52 to be sucked by the compressor 51.

In the refrigeration cycle apparatus 40 according to Embodiment 2, the motor 9 of the compressor 51 is driven with the AC voltage supplied from the power conversion device 1 according to Embodiment 1. Therefore, effects similar to those of Embodiment 1 are provided.

In Fig. 6, as the refrigeration cycle apparatus 40, there is illustrated an example in which the power conversion device 1 according to Embodiment 1 is connected to the motor 9 of the compressor 51 of the air-conditioning apparatus, but the power conversion device 1 may be connected to, for example, the motor 9 of the refrigeration cycle apparatus 40 such as a heat pump apparatus or a refrigerating apparatus.

Reference Signs List

1 power conversion device 2 rectifier 3 inrush prevention circuit 3a inrush preventing resistor 3b relay 4 booster circuit 5 smoothing capacitor 6 inverter 7 drive circuit 8 commercial power supply 9 motor 11 reactor 12 first backflow prevention device 13 second backflow prevention device 14 first switching device 15 second switching device 16 intermediate capacitor 20 controller 21 detection unit 22 determination unit 23 control unit 30 initial charging circuit 31 diode 32 Zener diode 40 refrigeration cycle apparatus 50 refrigerant circuit 51 compressor 51a compression device 52 four-way valve 53 first heat exchanger 54 expansion device 55 second heat exchanger 61 outdoor unit 62 indoor unit

## Claims

1. A power conversion device (1), comprising:

   a rectifier (2) configured to convert an AC voltage into a DC voltage and output the DC voltage;
   a resistance value changing circuit (3) configured to receive input of the DC voltage, including a resistor (3a) and a relay (3b) connected in parallel to the resistor (3a), and in which a resistance value is changed by an operation of the relay (3b);
   a booster circuit (4) configured to boost the DC voltage output from the resistance value changing circuit (3);
   a smoothing capacitor (5) configured to smooth the DC voltage output from the booster circuit (4),
   the booster circuit (4) including

      a reactor (11) connected in series to the resistance value changing circuit (3),
      a first backflow prevention device (12) and a second backflow prevention device (13) being formed as diodes and connecting the reactor (11) and one end of the smoothing capacitor (5) to allow an electric current to flow from the reactor (11) side to the smoothing capacitor (5) side, the first backflow prevention device (12) and the second backflow prevention device (13) being connected in series to each other,
      a first switching device (14) and a second switching device (15), connecting the reactor (11) and an other end of the smoothing capacitor (5), the first switching device (14) and the second switching device (15) being connected in series to each other, and
      an intermediate capacitor (16) connecting a point between the first backflow prevention device (12) and the second backflow prevention device (13) and a point between the first switching device (14) and the second switching device (15); and

a drive circuit (7) configured to generate a control power source to drive the first switching device (14) and the second switching device (15) with the control power source,

when a power supply is turned on, the drive circuit (7) being configured to generate the control power source,

a charging time of the smoothing capacitor (5) being delayed by changing the resistance value, and **characterized in that** the charging of the intermediate capacitor (16) is started before a charging voltage of the smoothing capacitor (5). is equal to a voltage rectified by the rectifier (2).

2. The power conversion device (1) of claim 1, wherein, when the power supply is turned on, the relay (3b) is turned off to connect the resistor (3a) and the reactor (11) in series.

3. The power conversion device (1) of claim 1 or 2, wherein the intermediate capacitor (16) is configured to

be charged via the second backflow prevention device (13) when the second switching device (15) is turned on, and
be discharged via the first backflow prevention device (12) when the first switching device (14) is turned on.

4. The power conversion device (1) of any one of claim 1 to 3, further comprising a controller (20) configured to control an operation of the booster circuit (4), wherein the controller (20) includes

a detection unit (21) configured to detect a capacitor voltage charged in the intermediate capacitor (16),
a determination unit (22) configured to determine whether or not the capacitor voltage, which is detected by the detection unit (21), falls within a threshold voltage range, and
a control unit (23) configured to cause, when the determination unit (22) determines that the capacitor voltage is outside the threshold voltage range, the drive circuit (7) to drive the first switching device (14) and the second switching device (15) so that the capacitor voltage falls within the threshold voltage range.

5. The power conversion device (1) of claim 4, further comprising an inverter (6) connected in parallel to the smoothing capacitor (5) to convert a DC voltage into an AC voltage,
wherein the control unit (23) is configured to cause, when the inverter (6) is stopped, and when the determination unit (22) determines that the capacitor voltage is outside the threshold voltage range, the drive circuit (7) to drive the first switching device (14) and the second switching device (15) so that the capacitor voltage falls within the threshold voltage range.

6. The power conversion device (1) of claim 4, further comprising an inverter (6) connected in parallel to the smoothing capacitor (5) to convert the DC voltage into an AC voltage,
wherein the control unit (23) is configured to cause, when the inverter (6) is in operation, and when the determination unit (22) determines that the capacitor voltage is outside the threshold voltage range, the drive circuit (7) to drive the first switching device (14) and the second switching device (15) so that the capacitor voltage falls within the threshold voltage range.

7. The power conversion device (1) of any one of claims 1 to 6, wherein the drive circuit (7) is configured to generate the control power source with a voltage supplied from the smoothing capacitor (5).

8. The power conversion device (1) of any one of claims 1 to 6, wherein the drive circuit (7) is configured to generate the control power source with a voltage supplied from a commercial power supply.

9. The power conversion device (1) of any one of claims 1 to 8, wherein the power conversion device (1) is configured so that, when a commercial power supply is turned on, a capacitor voltage charged in the intermediate capacitor (16) becomes lower than a voltage charged in the smoothing capacitor (5).

10. The power conversion device (1) of any one of claims 1 to 9,
wherein the smoothing capacitor (5) comprises a plurality of smoothing capacitors (5), and
wherein the power conversion device (1) further comprises an initial charging circuit (30) including

a diode (31) configured to allow an electric current to flow from a side of the point between the first switching device (14) and the second switching device (15) to a side of the point between the plurality of smoothing capacitors (5), and
a Zener diode (32) configured to prevent the electric current from flowing from the side of the point between the first switching device (14) and the second switching device (15) to the side of the point between the plurality of smoothing capacitors (5) until a Zener voltage is reached,

the diode (31) and the Zener diode (32) connect a point between the first switching device (14) and the second switching device (15) and a point between the plurality of smoothing capacitors (5).

**11.** The power conversion device (1) of any one of claims 1 to 10, further comprising:
an inverter (6) connected in parallel to the smoothing capacitor (5) to convert a DC voltage into an AC voltage,
wherein each of the first switching device (14) and the second switching device (15) is configured to have a withstand voltage that is lower than a withstand voltage of at least one of a semiconductor device used in the rectifier (2) or a semiconductor device used in the inverter (6).

**12.** The power conversion device (1) of any one of claims 1 to 11, wherein at least one of the first switching device (14), the second switching device (15), the first backflow prevention device (12), or the second backflow prevention device (13) is formed of a wide-bandgap semiconductor.

**13.** A refrigeration cycle apparatus, comprising:

the power conversion device (1) of any one of claims 1 to 12; and
a refrigerant circuit (50) formed by annularly connecting a compressor (51), to which electric power is to be supplied from the power conversion device (1), a first heat exchanger (53), an expansion device (54), and a second heat exchanger (55) with a refrigerant pipe.

**Patentansprüche**

**1.** Leistungswandlungsvorrichtung (1), umfassend:

einen Gleichrichter (2), der ausgebildet ist, eine Wechselspannung in eine Gleichspannung umzuwandeln und die Gleichspannung auszugeben;
eine Widerstandswert-Änderungsschaltung (3), die ausgebildet ist, eine Eingabe der Gleichspannung zu empfangen, und die einen Widerstand (3a) und ein parallel zu dem Widerstand (3a) geschaltetes Relais (3b) aufweist, und wobei ein Widerstandswert durch einen Betrieb des Relais (3b) geändert wird;
eine Verstärkerschaltung (4), die ausgebildet ist, die Gleichspannung, die von der Widerstandswert-Änderungsschaltung (3) ausgegeben wird, zu verstärken;
einen Glättungskondensator (5), der ausgebildet ist, die Gleichspannung, die von der Verstärkerschaltung (4) ausgegeben wird, zu glätten;
wobei die Verstärkerschaltung (4) aufweist:

eine Drossel (11), die mit der Widerstandswert-Änderungsschaltung (3) in Reihe geschaltet ist,

eine erste Rückstromschutzvorrichtung (12) und eine zweite Rückstromschutzvorrichtung (13), die als Dioden ausgebildet sind und die Drossel (11) und ein Ende des Glättungskondensators (5) verbinden, um das Fließen von elektrischem Strom von der Seite der Drossel (11) zur Seite des Glättungskondensators (5) zu ermöglichen, wobei die erste Rückstromschutzvorrichtung (12) und die zweite Rückstromschutzvorrichtung (13) hintereinander in Reihe geschaltet sind,
eine erste Schaltvorrichtung (14) und eine zweite Schaltvorrichtung (15), welche die Drossel (11) und ein anderes Ende des Glättungskondensators (5) verbinden, wobei die erste Schaltvorrichtung (14) und die zweite Schaltvorrichtung (15) hintereinander in Reihe geschaltet sind, und
einen Zwischenkondensator (16), der einen Punkt zwischen der ersten Rückstromschutzvorrichtung (12) und der zweiten Rückstromschutzvorrichtung (13) und einen Punkt zwischen der ersten Schaltvorrichtung (14) und der zweiten Schaltvorrichtung (15) verbindet; und

eine Treiberschaltung (7), die ausgebildet ist, eine Steuerleistungsquelle zu erzeugen, um die erste Schaltvorrichtung (14) und die zweite Schaltvorrichtung (15) mit der Steuerleistungsquelle anzusteuern,
wobei die Treiberschaltung (7) ausgebildet ist, die Steuerleistungsquelle zu erzeugen, wenn eine Leistungsversorgung eingeschaltet ist,
wobei eine Ladezeit des Glättungskondensators (5) durch Ändern des Widerstandswerts verzögert wird, und **dadurch gekennzeichnet, dass** das Laden des Zwischenkondensators (16) gestartet wird, bevor eine Ladespannung des Glättungskondensators (5) gleich einer vom Gleichrichter (2) gleichgerichteten Spannung ist.

**2.** Leistungswandlungsvorrichtung (1) nach Anspruch 1, wobei, wenn die Leistungsversorgung eingeschaltet wird, das Relais (3b) ausgeschaltet wird, um den Widerstand (3a) und die Drossel (11) in Reihe zu schalten.

**3.** Leistungswandlungsvorrichtung (1) nach Anspruch 1 oder 2, wobei der Zwischenkondensator (16) ausgebildet ist,

über die zweite Rückstromschutzvorrichtung (13) geladen zu werden, wenn die zweite Schaltvorrichtung (15) eingeschaltet ist, und
über die erste Rückstromschutzvorrichtung (12) entladen zu werden, wenn die erste Schaltvorrichtung (14) eingeschaltet ist.

4. Leistungswandlungsvorrichtung (1) nach einem der Ansprüche 1 bis 3, ferner eine Steuereinrichtung (20) umfassend, die ausgebildet ist, einen Betrieb der Verstärkerschaltung (4) zu steuern, wobei die Steuereinrichtung (20) aufweist:

   eine Erfassungsschaltung (21), die ausgebildet ist, eine Kondensatorspannung, die in dem Zwischenkondensator (16) geladen ist, zu erfassen, eine Bestimmungseinheit (22), die ausgebildet ist, zu bestimmen, ob oder ob nicht die Kondensatorspannung, die von der Erfassungseinheit (21) erfasst wird, in einem Schwellenspannungsbereich liegt, und eine Steuereinheit (23), die ausgebildet ist, wenn die Bestimmungseinheit (22) bestimmt, dass die Kondensatorspannung außerhalb des Schwellenspannungsbereichs liegt, die Treiberschaltung (7) zu veranlassen, die erste Schaltvorrichtung (14) und die zweite Schaltvorrichtung (15) so anzusteuern, dass die Kondensatorspannung in den Schwellenspannungsbereich fällt.

5. Leistungswandlungsvorrichtung (1) nach Anspruch 4, ferner einen Wechselrichter (6) umfassend, der parallel zum Glättungskondensator (5) geschaltet ist, um eine Gleichspannung in eine Wechselspannung umzuwandeln, wobei die Steuereinheit (23) ausgebildet ist, wenn der Wechselrichter (6) angehalten wurde und wenn die Bestimmungseinheit (22) bestimmt, dass die Kondensatorspannung außerhalb des Schwellenspannungsbereichs liegt, die Treiberschaltung (7) zu veranlassen, die erste Schaltvorrichtung (14) und die zweite Schaltvorrichtung (15) so anzusteuern, dass die Kondensatorspannung in den Schwellenspannungsbereich fällt.

6. Leistungswandlungsvorrichtung (1) nach Anspruch 4, ferner einen Wechselrichter (6) umfassend, der parallel zum Glättungskondensator (5) geschaltet ist, um die Gleichspannung in eine Wechselspannung umzuwandeln, wobei die Steuereinheit (23) ausgebildet ist, wenn der Wechselrichter (6) in Betrieb ist und wenn die Bestimmungseinheit (22) bestimmt, dass die Kondensatorspannung außerhalb des Schwellenspannungsbereichs liegt, die Treiberschaltung (7) zu veranlassen, die erste Schaltvorrichtung (14) und die zweite Schaltvorrichtung (15) so anzusteuern, dass die Kondensatorspannung in dem Schwellenspannungsbereich liegt.

7. Leistungswandlungsvorrichtung (1) nach einem der Ansprüche 1 bis 6, wobei die Treiberschaltung (7) ausgebildet ist, die Steuerleistungsquelle mit einer Spannung zu erzeugen, die vom Glättungskondensator (5) geliefert wird.

8. Leistungswandlungsvorrichtung (1) nach einem der Ansprüche 1 bis 6, wobei die Treiberschaltung (7) ausgebildet ist, die Steuerleistungsquelle mit einer Spannung zu erzeugen, die von einer kommerziellen Leistungsversorgung geliefert wird.

9. Leistungswandlungsvorrichtung (1) nach einem der Ansprüche 1 bis 8, wobei die Leistungswandlungsvorrichtung (1) so ausgebildet ist, dass, wenn eine kommerzielle Leistungsversorgung eingeschaltet wird, eine Kondensatorspannung, die in den Zwischenkondensator (16) geladen wird, niedriger wird als eine Spannung, die in den Glättungskondensator (5) geladen wird.

10. Leistungswandlungsvorrichtung (1) nach einem der Ansprüche 1 bis 9,

    wobei der Glättungskondensator (5) mehrere Glättungskondensatoren (5) umfasst, und wobei die Leistungswandlungsvorrichtung (1) ferner eine Anfangsladeschaltung (30) umfasst, die aufweist:

    eine Diode (31), die ausgebildet ist, ein Fließen von elektrischem Strom von einer Seite des Punktes zwischen der ersten Schaltvorrichtung (14) und der zweiten Schaltvorrichtung (15) zu einer Seite des Punktes zwischen den mehreren Glättungskondensatoren (5) zu ermöglichen, und eine Zener-Diode (32), die ausgebildet ist, ein Fließen des elektrischen Stroms von der Seite des Punktes zwischen der ersten Schaltvorrichtung (14) und der zweiten Schaltvorrichtung (15) zu der Seite des Punktes zwischen den mehreren Glättungskondensatoren (5) zu verhindern, bis eine Zener-Spannung erreicht ist,

    wobei die Diode (31) und die Zener-Diode (32) einen Punkt zwischen der ersten Schaltvorrichtung (14) und der zweiten Schaltvorrichtung (15) und einen Punkt zwischen den mehreren Glättungskondensatoren (5) verbinden.

11. Leistungswandlungsvorrichtung (1) nach einem der Ansprüche 1 bis 10, ferner umfassend:

    einen Wechselrichter (6), der parallel zum Glättungskondensator (5) geschaltet ist, um eine Gleichspannung in eine Wechselspannung umzuwandeln,

wobei jede von der ersten Schaltvorrichtung (14) und der zweiten Schaltvorrichtung (15) ausgebildet ist, eine Stehspannung aufzuweisen, die niedriger ist als eine Stehspannung von mindestens einer von einer Halbleitervorrichtung, die im Gleichrichter (2) verwendet wird, oder einer Halbleitervorrichtung, die im Wechselrichter (6) verwendet wird.

12. Leistungswandlungsvorrichtung (1) nach einem der Ansprüche 1 bis 11, wobei mindestens eine von der ersten Schaltvorrichtung (14), der zweiten Schaltvorrichtung (15), der ersten Rückstromschutzvorrichtung (12) oder der zweiten Rückstromschutzvorrichtung (13) von einem Halbleiter mit großer Bandlücke gebildet wird.

13. Kühlkreislaufgerät, aufweisend:

die Leistungswandlungsvorrichtung (1) nach einem der Ansprüche 1 bis 12, und
einen Kühlkreislauf (50), der durch ringförmiges Verbinden eines Kompressors (51), zu dem elektrische Leistung aus der Leistungswandlungsvorrichtung (1) geliefert werden soll, eines ersten Wärmetauschers (53), einer Expansionsvorrichtung (54) und eines zweiten Wärmetauschers (55) mit einem Kühlrohr gebildet wird.

## Revendications

1. Dispositif de conversion de puissance (1), comprenant :

un redresseur (2) configuré pour convertir une tension CA en une tension CC et délivrer en sortie la tension CC ;
un circuit de modification de valeur de résistance (3) configuré pour recevoir une entrée de la tension CC, comprenant une résistance (3a) et un relais (3b) connecté en parallèle à la résistance (3a), et dans lequel une valeur de résistance est modifiée par une opération du relais (3b) ;
un circuit amplificateur (4) configuré pour amplifier la sortie de tension CC provenant du circuit de modification de valeur de résistance (3) ;
un condensateur de lissage (5) configuré pour lisser la sortie de tension CC provenant du circuit amplificateur (4),
le circuit amplificateur (4) comprenant

un réacteur (11) connecté en série au circuit de modification de valeur de résistance (3),
un premier dispositif de prévention de refoulement (12) et un deuxième dispositif de prévention de refoulement (13) étant formés sous forme de diodes et connectant le réacteur (11) et une extrémité du condensateur de lissage (5) pour permettre à un courant électrique de circuler depuis le côté de réacteur (11) vers le côté de condensateur de lissage (5), le premier dispositif de prévention de refoulement (12) et le deuxième dispositif de prévention de refoulement (13) étant connectés en série l'un à l'autre, un premier dispositif de commutation (14) et un deuxième dispositif de commutation (15), connectant le réacteur (11) et une autre extrémité du condensateur de lissage (5), le premier dispositif de commutation (14) et le deuxième dispositif de commutation (15) étant connectés en série l'un à l'autre, et
un condensateur intermédiaire (16) connectant un point entre le premier dispositif de prévention de refoulement (12) et le deuxième dispositif de prévention de refoulement (13) et un point entre le premier dispositif de commutation (14) et le deuxième dispositif de commutation (15) ; et

un circuit d'attaque (7) configuré pour générer une source de puissance de commande pour exciter le premier dispositif de commutation (14) et le deuxième dispositif de commutation (15) avec la source de puissance de commande, lorsqu'une alimentation électrique est activée, le circuit d'attaque (7) étant configuré pour générer la source de puissance de commande, un temps de charge du condensateur de lissage (5) étant retardé par modification de la valeur de résistance, et **caractérisé en ce que** la charge du condensateur intermédiaire (16) est démarrée avant qu'une tension de charge du condensateur de lissage (5) soit égale à une tension redressée par la redresseur (2).

2. Dispositif de conversion de puissance (1) selon la revendication 1, dans lequel, lorsque l'alimentation électrique est activée, le relais (3b) est désactivé pour connecter la résistance (3a) et le réacteur (11) en série.

3. Dispositif de conversion de puissance (1) selon la revendication 1 ou 2, dans lequel le condensateur intermédiaire (16) est configuré pour

être chargé par l'intermédiaire du deuxième dispositif de prévention de refoulement (13) lorsque le deuxième dispositif de commutation (15) est activé, et
être déchargé par l'intermédiaire du premier dispositif de prévention de refoulement (12) lorsque le premier dispositif de commutation (14) est activé.

**4.** Dispositif de conversion de puissance (1) selon l'une quelconque des revendications 1 à 3, comprenant en outre un dispositif de commande (20) configuré pour commander un fonctionnement du circuit amplificateur (4),

dans lequel le dispositif de commande (20) comprend

une unité de détection (21) configurée pour détecter une tension de condensateur chargée dans le condensateur intermédiaire (16),

une unité de détermination (22) configurée pour déterminer si la tension de condensateur, qui est détectée par l'unité de détection (21), est ou non située dans une plage de tension de seuil, et

une unité de commande (23) configurée pour amener, lorsque l'unité de détermination (22) détermine que la tension de condensateur est à l'extérieur de la plage de tension de seuil, le circuit d'attaque (7) à exciter le premier dispositif de commutation (14) et le deuxième dispositif de commutation (15) de sorte que la tension de condensateur soit située dans la plage de tension de seuil.

**5.** Dispositif de conversion de puissance (1) selon la revendication 4, comprenant en outre un onduleur (6) connecté en parallèle au condensateur de lissage (5) pour convertir une tension CC en une tension CA, dans lequel l'unité de commande (23) est configurée pour amener, lorsque l'onduleur (6) est arrêté, et lorsque l'unité de détermination (22) détermine que la tension de condensateur est à l'extérieur de la plage de tension de seuil, le circuit d'attaque (7) à exciter le premier dispositif de commutation (14) et le deuxième dispositif de commutation (15) de sorte que la tension de condensateur soit située dans la plage de tension de seuil.

**6.** Dispositif de conversion de puissance (1) selon la revendication 4, comprenant en outre un onduleur (6) connecté en parallèle au condensateur de lissage (5) pour convertir la tension CC en une tension CA, dans lequel l'unité de commande (23) est configurée pour amener, lorsque l'onduleur (6) est en fonctionnement, et lorsque l'unité de détermination (22) détermine que la tension de condensateur est à l'extérieur de la plage de tension de seuil, le circuit d'attaque (7) à exciter le premier dispositif de commutation (14) et le deuxième dispositif de commutation (15) de sorte que la tension de condensateur soit située dans la plage de tension de seuil.

**7.** Dispositif de conversion de puissance (1) selon l'une quelconque des revendications 1 à 6, dans lequel le circuit d'attaque (7) est configuré pour générer la source de puissance de commande avec une tension distribuée depuis le condensateur de lissage (5).

**8.** Dispositif de conversion de puissance (1) selon l'une quelconque des revendications 1 à 6, dans lequel le circuit d'attaque (7) est configuré pour générer la source de puissance de commande avec une tension distribuée depuis une alimentation électrique commerciale.

**9.** Dispositif de conversion de puissance (1) selon l'une quelconque des revendications 1 à 8, le dispositif de conversion de puissance (1) étant configuré de sorte que, lorsqu'une alimentation électrique commerciale est activée, une tension de condensateur chargée dans le condensateur intermédiaire (16) devienne inférieure à une tension chargée dans le condensateur de lissage (5).

**10.** Dispositif de conversion de puissance (1) selon l'une quelconque des revendications 1 à 9,

dans lequel le condensateur de lissage (5) comprend une pluralité de condensateurs de lissage (5), et

dans lequel le dispositif de conversion de puissance (1) comprend en outre un circuit de charge initiale (30) comprenant

une diode (31) configurée pour permettre à un courant électrique de circuler d'un côté du point entre le premier dispositif de commutation (14) et le deuxième dispositif de commutation (15) vers un côté du point entre la pluralité de condensateurs de lissage (5), et

une diode Zener (32) configurée pour empêcher le courant électrique de circuler du côté du point entre le premier dispositif de commutation (14) et le deuxième dispositif de commutation (15) vers le côté du point entre la pluralité de condensateurs de lissage (5) jusqu'à ce qu'une tension Zener soit atteinte,

la diode (31) et la diode Zener (32) connectent un point entre le premier dispositif de commutation (14) et le deuxième dispositif de commutation (15) et un point entre la pluralité de condensateurs de lissage (5).

**11.** Dispositif de conversion de puissance (1) selon l'une quelconque des revendications 1 à 10, comprenant en outre :

un onduleur (6) connecté en parallèle au condensateur de lissage (5) pour convertir une tension CC en une tension CA,

dans lequel chacun du premier dispositif de commutation (14) et du deuxième dispositif de commutation (15) est configuré pour avoir une tension de tenue qui est inférieure à une tension de tenue d'au moins l'un parmi un dispositif à semi-conducteur utilisé dans le redresseur (2) ou un dispositif à semi-conducteur utilisé dans l'onduleur (6).

**12.** Dispositif de conversion de puissance (1) selon l'une quelconque des revendications 1 à 11, dans lequel au moins l'un parmi le premier dispositif de commutation (14), le deuxième dispositif de commutation (15), le premier dispositif de prévention de refoulement (12) ou le deuxième dispositif de prévention de refoulement (13) est formé d'un semi-conducteur à large bande interdite.

**13.** Appareil à cycle de réfrigération, comprenant :

le dispositif de conversion de puissance (1) selon l'une quelconque des revendications 1 à 12 ; et
un circuit de fluide frigorigène (50) formé par connexion annulaire d'un compresseur (51), auquel une énergie électrique doit être fournie depuis le dispositif de conversion de puissance (1), un premier échangeur de chaleur (53), un dispositif de détente (54), et un deuxième échangeur de chaleur (55) avec un tuyau de fluide frigorigène.

FIG. 1

FIG. 2A

## FIG. 2B

## FIG. 2C

## FIG. 2D

# FIG. 3

BREAKER

On

CONTROL
POWER SOURCE

On

SIGNAL FOR
CONTROLLING
SECOND SWITCH-
ING DEVICE

On

VOLTAGE OF
SMOOTHING
CAPACITOR

VOLTAGE OF
INTERMEDIATE
CAPACITOR

FIRST
THRESHOLD
VALUE

SECOND
THRESHOLD
VALUE

# FIG. 4

## FIG. 5

## FIG. 6

**REFERENCES CITED IN THE DESCRIPTION**

**Patent documents cited in the description**

- JP 5528622 B
- WO 2015011879 A1